# EUROPEAN PATENT SPECIFICATION

(11) **EP 3 517 262 B1**
(45) Date of publication and mention of the grant of the patent: **21.07.2021**
(21) Application number: 19153913.9
(22) Date of filing: 28.01.2019
(51) Int. Cl.: B27D 3/02, B27D 1/08, B27C 5/06, B23Q 1/60, B23Q 3/06

(54) **APPARATUS FOR CLAMPING A WORKPIECE**
AUFSPANNAPPARAT FÜR EIN WERKSTÜCK
APPAREIL POUR SERRER UNE PIÈCE

(30) Priority: 30.01.2018 IT 201800002189
(43) Date of publication of application: 31.07.2019
(73) Proprietor: Mecal Machinery S.r.l., 27030 Frascarolo (PV) (IT)
(72) Inventor: Cavezzale, Ennio, 27030 Frascarolo (PV) (IT)
(74) Representative: Perani & Partners S.p.A.

(56) References cited:
- EP-A1- 2 875 923
- DE-A1- 3 600 231
- JP-A- S6 445 537
- SU-A1- 994 128

## Description

The present invention relates to an apparatus for clamping a workpiece, as per the preamble of claim 1. Such a clamping apparatus is known from document DE 3600231 A1.

A profile machining workstation is known in the art. Such work station comprises a base which longitudinally extends in a work direction. Such base supports longitudinal guides. Multiple clamping apparatuses are mounted to such guides, each being free to move independently of the others in the work direction.

Each clamping apparatus comprises a support body connected to the longitudinal guides via sliding blocks. Such support body comprises a bearing surface for supporting the workpiece. In particular a vise is mounted to the bearing surface. Such vise comprises a stationary jaw and a movable jaw, moving along a clamping direction perpendicular to the work direction, which are opposite to each other. Furthermore, this clamping apparatus comprises first pneumatic means for moving the movable jaw. The first pneumatic means are configured to move the movable jaw from an open configuration to a clamping configuration and vice versa.

Namely, the clamping apparatuses have the purpose to support the workpiece by means of the bearing surface, between the stationary jaw and the movable jaw. Also, these clamping apparatuses also have the purposes to immobilize the workpiece and move it in the work direction.

The immobilization purpose is fulfilled by the vises in the clamping configuration.

The workpiece moving purpose is fulfilled according to first and second modes. In the first mode, the clamping apparatuses clamp the workpiece and move it in the work direction. The second mode is divided into:
- a first step which comprises moving at least one first clamping apparatus in an open configuration along the workpiece;
- a second step which comprises clamping the workpiece by the first clamping apparatus;
- a third step comprises opening second clamping apparatuses that previously clamped the workpiece. In this step, such second apparatuses support the workpiece;
- a fourth step which comprises moving the first clamping apparatus in the work direction.

In recent years profiles have been known in the art to be particularly surface-machined upstream from the machining processes that can be carried out in the workstation as described herein. Therefore, greater care is being taken to ensure that the previous polishing and chromium plating steps on the profiles would not be compromised.

The profile machining workstation of the prior art has the drawback of having a number of defects caused by the clamping apparatuses. In particular, during the fourth step the second clamping apparatuses may cause damage to the outer surface of the workpiece. More in detail, the workpiece clamped and moved by first clamping apparatuses, is dragged along the bearing surface of the apparatuses that are acting as supports, which may potentially cause abrasion of the outer surface of the workpiece.

### SUMMARY OF THE INVENTION

In this context, the technical purpose of the present invention is to provide a clamping apparatus that can obviate the aforementioned prior art drawbacks.

In particular, the present invention has the object to provide a clamping apparatus that can minimize any abrasion and damage on the surface of a workpiece.

The aforementioned technical purpose and objects are fulfilled by a clamping apparatus that comprises the technical features as disclosed in claim 1.

The clamping apparatus comprises a support body which is configured to move along a work direction. A vise is mounted to such clamping apparatus. Such vise comprises a stationary jaw and a movable jaw, moving along a clamping direction perpendicular to the work direction. This movable jaw is moved from and to the stationary jaw by means of actuator means. The vise has the purpose to clamp a workpiece.

The support body comprises a first element having translating members configured to be coupled to first translation guides to move the support body along the work direction. The support body also comprises a second element operably associated with the first element. Such second element is configured to reversibly move relative to the first element along an inclined direction of motion that forms a non-zero angle with the clamping direction and is perpendicular to the work direction. The vise is mounted to the second element of the support body. More in detail, the support body comprises translation means configured to reversibly translate the second element relative to the first element along the direction of motion.

The first element of the support body has an upper surface. This upper surface extends along the direction of motion.

Such clamping apparatus solves the aforementioned technical problem of surface damage of the workpiece, because the movement of the second element relative to the first element along the direction of movement moves it away from the workpiece thereby preventing the workpiece from being dragged since the workpiece is moved along the work direction.

### LIST OF DRAWINGS

Further features and advantages of the present invention will result more clearly from the illustrative, non-limiting description of a preferred, non-exclusive embodiment of an apparatus for clamping a workpiece as shown in the annexed drawings, in which:
- Figure 1 is a perspective view of a clamping apparatus of the present invention;
- Figure 2 is a sectional view of the clamping apparatus of Figure 1;
- Figure 3 is a perspective view of a detail of the clamping apparatus of Figures 1 and 2;
- Figure 4 is a perspective view of the clamping apparatus of Figures 1 and 2, with certain parts omitted to better show other parts;
- Figure 5 is a perspective view of a workstation comprising a plurality of clamping apparatuses of Figures 1 and 2.

### DETAILED DESCRIPTION

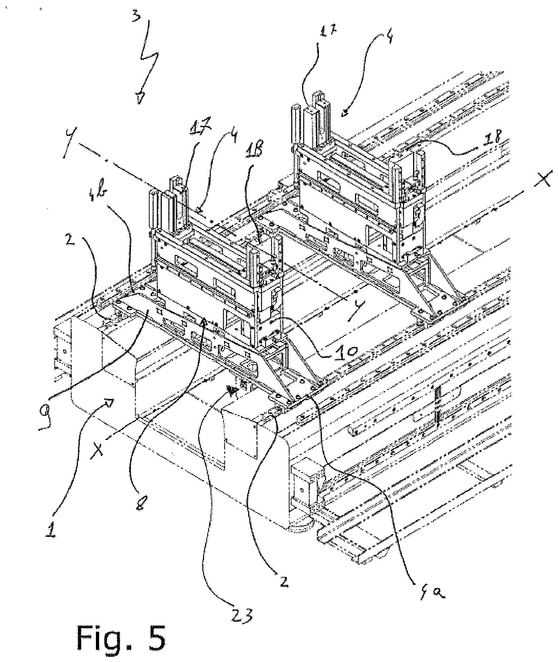

Referring to the annexed figures, numeral 4 designates a clamping apparatus of the present invention. Particularly referring to Figure 5, multiple clamping apparatuses 4 are integrated in a single workstation 3.

The workstation 3 comprises a base 1, which extends longitudinally along a work direction X-X and preferably rests upon a preferably horizontal support surface, not shown, for example a floor.

The base 1 supports at least two first translation guides 2 which extend in the work direction X-X.

Each clamping apparatus 4 is oriented transverse to the work direction X-X on the base 1, and is particularly configured to support and clamp a workpiece, not shown. In operation, the clamping apparatuses 4 move the workpiece along the work direction X-X.

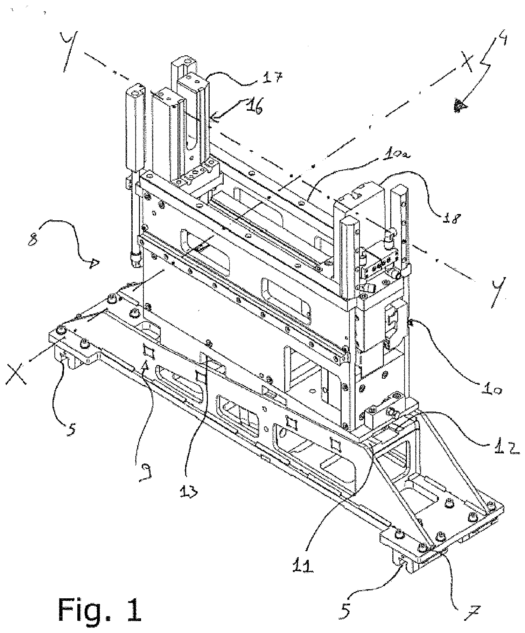

More in detail, as shown in Figure 1, each clamping apparatus 4 extends in a clamping along direction Y-Y which is oriented substantially perpendicular to the work direction X-X and is supported by the first translation guides 2. In particular a work surface is defined parallel to the work direction X-X and to the clamping direction Y-Y. Each clamping apparatus 4 extends from a first end 4a to a second end 4b along the clamping direction Y-Y.

Each clamping apparatus 4 comprises a vise 16. Such vise 16 comprises a stationary jaw 17 and a movable jaw 18, moving along the clamping direction Y-Y, which are opposite to each other. In particular, the movable jaw 18 is adapted to move between the first end 4a and the second end 4b of the clamping apparatus 4.

More in detail, the vise 16 is configured to move between an open configuration and a clamping configuration, particularly with an intermediate configuration therebetween.

In the open configuration, the movable jaw 18 is placed proximate to the first end 4a.

In the clamping configuration, the movable jaw 18 is close to the stationary jaw 17, to thereby lock the workpiece.

In the intermediate configuration, the workpiece contacts the stationary jaw 17 and the movable jaw 18 is close thereto without contacting it. For example, the movable jaw 18 is placed a few millimeters away from the workpiece.

Each clamping apparatus 4 comprises a support body 8 connected to the first translation guides 2. More in detail, the support body 8 comprises a first element 9 which is configured to move along the work direction X-X and be coupled to the first translation guides 2.

The support body 8 also comprises a second element 10 which is operably associated with the first element 9. This second element 10 is configured to move along an inclined direction of motion U-U, that forms a non-zero angle with the clamping direction Y-Y and is perpendicular to the work direction X-X.

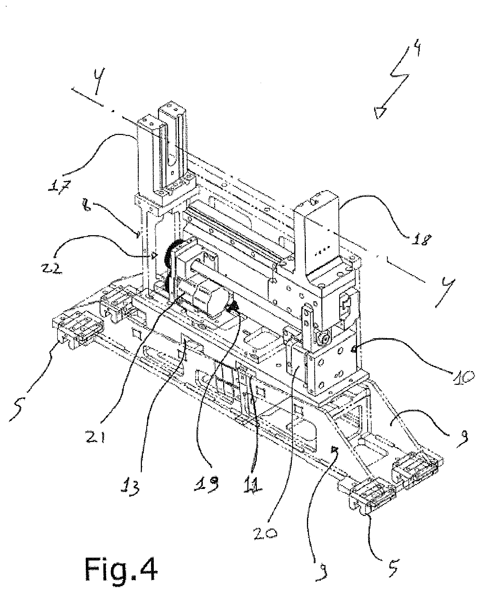

It shall be noted that the movable jaw 18 is driven by actuator means 19 connected to the second element 10. As shown in Figure 4, the second element 10 has a cavity 22. The actuator means 19 are preferably placed in the cavity 22 of the second element 10.

More in detail, the actuator means 19 comprise a pneumatic actuator 20 and an electric actuator 21, which are configured to move in sequence. This electric actuator 21 is configured to move the vise 16 from the open configuration to the intermediate configuration and vice versa. In particular this electric actuator 21 has the purpose of moving the movable jaw 18 along the greater length of the stroke. The pneumatic actuator 20 is configured to move the vise 16 from the intermediate configuration to the workpiece clamping configuration and vice versa. In particular this pneumatic actuator 20 has the purpose of moving the movable jaw 18 along the final length of the stroke, and particularly the shorter length of the stroke. More in detail, the pneumatic actuator 20 is used to ensure secure clamping of the workpiece between the stationary jaw 17 and the movable jaw 18.

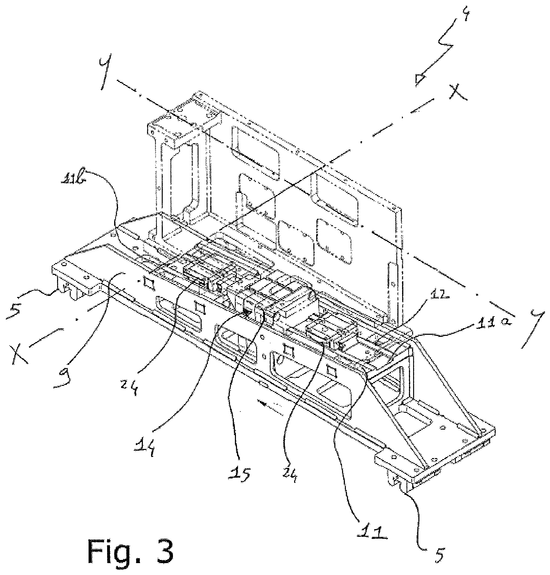

More in detail, the first element 9 has an upper surface 11 that is inclined to the work surface. The upper surface 11 extends along the direction of motion U-U. In the embodiment of the present invention as shown in Figure 3, the upper surface 11 extends substantially along an inclined plane defined by the work direction X-X and the direction of motion U-U. In further embodiments, not shown, the upper surface 11 may have any design, and particularly may not be a flat surface.

This upper surface 11 also has a first edge 11a substantially at the first end 4a and a second edge 11b substantially at the second end 4b. In the embodiment as shown in Figure 3, such first edge 11a is the apex of the upper surface 11.

The first element 9 of the support body 8 further comprises a second translation guide 12 provided on the upper surface 11. The second translation guide 12 extends along the direction of motion U-U.

Particularly referring to Figure 5, the first element 9 of the support body 8 comprises drive members 23 configured to move the clamping apparatus 4 in the work direction by coupling with the first translation guides 2. In particular these drive members 23 comprise sliding blocks 5 which rest upon the first translation guides 2, so that each clamping apparatus 4 will independently slide along the work direction X-X.

As shown in Figure 1, the sliding blocks 5 are mounted to the first element 9 of the support body 8 by means of clamping screws 7. In further embodiments, not shown, such sliding blocks 5 are an integral part of the clamping apparatus 4.

The movement of each clamping apparatus 4 in the work direction X-X is achieved by means that are known to the skilled person and will not be further described.

More in detail, the second element 10 has a lower surface 13 that faces the upper surface 11 of the first element 9. As shown in Figure 4, this lower surface 13 extends along the above described direction of motion U-U. Even more in detail, this lower surface 13 is configured to be coupled to the upper surface 11 in complementary way. More in detail, the lower surface 13 is inclined according to the above described inclined plane. In further embodiments, not shown, the lower surface 13 may have any trend, and particularly may not be a flat surface.

More in detail, the second element 10 has a bearing surface 10a opposite to the lower surface 13 and substantially parallel to the work surface.

The second element 10 is configured to translate along the upper surface 11 while maintaining the bearing surface 10a substantially parallel to the work surface. In particular, the lower surface 13 is coupled to the second translation guide 12. Even more in detail, the lower surface 13 slides along the direction of motion U-U relative to the first element 9 by means of the second translation guide 12. For example, as shown in Figure 3, the second element 10 slides in the direction of motion U-U on slides 24 that are fixed to the first element 10 and coupled to the second translation guide 12.

In further embodiments, not shown, the clamping apparatus 4 may comprise intermediate connection means between the upper surface 11 and the lower surface 13. These additional connection means may be embodied, for instance, by carriages, that allow the lower surface 13 to slide relative to the upper surface along the direction of motion U-U.

As shown in Figure 3, the second element 10 is moved along the direction of motion U-U by translation means 14 that are fixed to the first element 9.

These translation means 14 comprise a slider 14a that is firmly fixed to the second element 10. More in detail, the slider 14a is moved in the direction of motion U-U by a motor 15, namely a second pneumatic actuator, and is configured to translate along the second translation guide 12 of the first element 9.

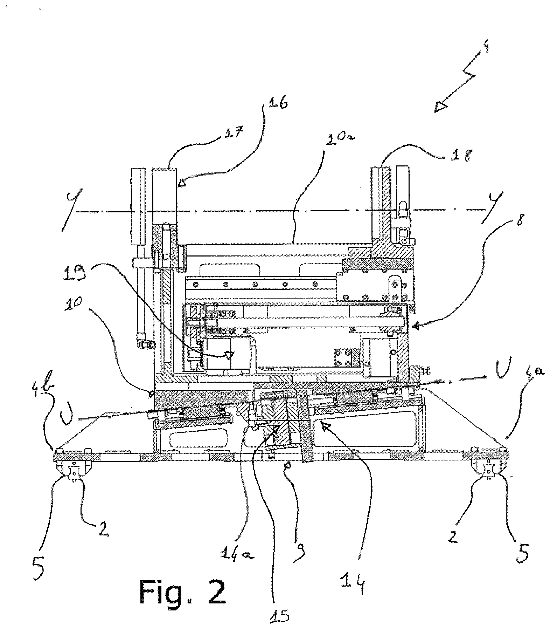

As shown in Figure 2, the bearing surface 10a is interposed between the stationary jaw 17 and the movable jaw 18.

Advantageously, as the vise 16 is mounted to the second element 10 of the support body 8, it is allowed to move both along the direction of movement U-U and along the work direction X-X. The translational movement of the vise 16 along the direction of motion U-U allows the workpiece to move away from the bearing surface 10a and the stationary jaw 17.

With the clamping apparatus 4 as described above, the movement of the workpiece in the work station 3 may comprise an initial step of positioning the workpiece at the clamping apparatuses 4, and particularly between the stationary jaws 17 and the movable jaws 18.

Then, the workpiece is clamped at least at two clamping apparatuses 4, and particularly by switching the vise 16 to the clamping configuration.

Then, the vises 16 of the other clamping apparatuses 4 are moved away from the workpiece in their respective directions of motion U-U. Subsequently the clamping apparatuses 4 clamped on the workpiece in the work direction X-X are moved, to thereby move the workpiece to the new position.

It shall be noted that the steps of clamping the workpiece and moving away the clamping apparatuses are carried out sequentially or simultaneously.

## Claims

1. A clamping apparatus (4), comprising:
- a support body (8) configured to move in a work direction (X-X),
- a vise (16) comprising a stationary jaw (17) and a movable jaw (18) which moves in a clamping direction (Y-Y), perpendicular to the work direction (X-X), from and to the stationary jaw (17) to clamp a workpiece,
- actuator means (19) for moving the movable jaw (18) relative to the stationary jaw (17) in the clamping direction (Y-Y),
**characterized in that** said support body (8) comprises:
- a first element (9) having drive means (23) configured to be coupled to first translation guides (2) to move the support body along the work direction (X-X), said first element (9) having an upper surface (11),
- a second element (10), which is operably associated with the first element (9) and is configured to reversibly move relative to the first element (9) along an inclined direction of motion (U-U), that forms a non-zero angle with the clamping direction (Y-Y) and is perpendicular to the work direction (X-X), said vise (16) being mounted to the second element (10), the upper surface (11) of the first element (9) extending along said direction of motion (U-U),
- translating means (14) configured to reversibly translate the second element (10) relative to the first element (9) along the direction of motion (U-U).

2. A clamping apparatus (4) as claimed in the preceding claim, **characterized in that** said first element (9) comprises a second translation guide (12) on said upper surface (11), which extends along said direction of motion (U-U).

3. A clamping apparatus (4) as claimed in the preceding claim, **characterized in that** said second element (10) of the support body (8) has a lower surface (13); said lower surface (13) facing said upper surface (11) of the first element (9) of the support body (4) and being configured to reversibly slide along said second translation guide (12).

4. A clamping apparatus (4) as claimed in any of the preceding claims, **characterized in that** said translation means (14) comprise a slider (14a), which is stably fixed to the second element (10) of the support body (4); a motor (15) being attached to said first element (10) and being configured to actuate said slider (14a) in the direction of motion (U-U).

5. A clamping apparatus (4) as claimed in any of the preceding claims, **characterized in that** said actuator means (19) comprise an electric actuator (21) and a pneumatic actuator (20); said electric actuator (21) and said pneumatic actuator (20) being configured to be sequentially actuated.

6. A clamping apparatus (4) as claimed in the preceding claim, **characterized in that** said electric actuator (21) is configured to switch said vise (16) between an open configuration and an intermediate configuration.

7. A clamping apparatus (4) as claimed in the preceding claim, **characterized in that** said pneumatic actuator (20) is configured to switch said vise (16) between said intermediate configuration and a clamping configuration.

8. A clamping apparatus (4) as claimed in the preceding claim, **characterized in that** said actuator means (19) are attached to said second element (10) of the support body (4).

9. A clamping apparatus (4) as claimed in any of the preceding claims, **characterized in that** said drive means (23) comprise at least two sliding blocks (5) which are configured to slide along the work direction (X-X).

10. A clamping apparatus (4) as claimed in any of the preceding claims, **characterized in that** said upper surface (11) is not a flat surface.

11. A workstation (3) **characterized in that** it comprises a plurality of clamping apparatuses (4) as claimed in any of the preceding claims.

## Patentansprüche

1. Eine Klemmvorrichtung (4), umfassend:
- einen Stützkörper (8), der so konfiguriert ist, dass er sich in eine Arbeitsrichtung (X-X) bewegt,
- eine Schraubzwinge (16) mit einer stationären Klemmbacke (17) und einer beweglichen Klemmbacke (18), die sich in einer Klemmrichtung (Y-Y) senkrecht zur Arbeitsrichtung (X-X) von und zu der stationären Klemmbacke (17) hinbewegt, um ein Werkstück einzuklemmen,
- Betätigungsmittel (19) zum Bewegen der beweglichen Klemmbacke (18) relativ zu der stationären Klemmbacke (17) in der Klemmrichtung (Y-Y)
**gekennzeichnet dadurch, dass** der Stützkörper (8) umfasst:
- ein erstes Element (9) mit Antriebsmitteln (23), die konfiguriert sind, um mit ersten Translationsführungen (2) gekoppelt zu werden, um den Stützkörper entlang der Arbeitsrichtung (X-X) zu bewegen, wobei das erste Element (9) eine obere Fläche (11) aufweist,
- ein zweites Element (10), das dem ersten Element (9) betriebsfähig zugeordnet und so konfiguriert ist, dass es sich relativ zum ersten Element (9) entlang einer geneigten Bewegungsrichtung (U-U), die mit der Klemmrichtung (Y-Y) einen von Null verschiedenen Winkel bildet und senkrecht zur Arbeitsrichtung (X-X) steht, reversibel bewegt, wobei die Schraubzwinge (16) am zweiten Element (10) angebracht ist und die obere Fläche (11) des ersten Elements (9) sich entlang der Bewegungsrichtung (U-U) erstreckt,
- Translationsmittel (14), die so konfiguriert sind, um das zweite Element (10) relativ zu dem ersten Element (9) entlang der Bewegungsrichtung (U-U) reversibel zu verschieben.

2. Klemmvorrichtung (4) nach dem vorhergehenden Anspruch, **gekennzeichnet dadurch, dass** das erste Element (9) eine zweite Translationsführung (12) auf der oberen Fläche (11) umfasst, die sich entlang der Bewegungsrichtung (U-U) erstreckt.

3. Klemmvorrichtung (4) nach dem vorhergehenden Anspruch, **gekennzeichnet dadurch, dass** das zweite Element (10) des Stützkörpers (8) eine untere Fläche (13) aufweist, die (13) zur oberen Fläche (11) des ersten Elements (9) des Stützkörpers (4) weist und so konfiguriert ist, dass sie reversibel entlang der zweiten Translationsführung (12) gleitet.

4. Klemmvorrichtung (4) nach einem der vorhergehenden Ansprüche, **gekennzeichnet dadurch, dass** die Translationsmittel (14) einen Gleiter (14a) umfassen, der am zweiten Element (10) des Stützkörpers (4) stabil befestigt ist; wobei ein Motor (15) am ersten Element (10) befestigt ist und so konfiguriert ist, dass er den Gleiter (14a) in Bewegungsrichtung (U-U) betätigt.

5. Klemmvorrichtung (4) nach einem der vorhergehenden Ansprüche, **dadurch gekennzeichnet, dass** die Betätigungsmittel (19) einen elektrischen Aktuator (21) und einen pneumatischen Aktuator (20) umfassen; wobei der elektrische Aktuator (21) und der pneumatische Aktuator (20) so konfiguriert sind, dass sie nacheinander betätigt werden.

6. Klemmvorrichtung (4) nach dem vorhergehenden Anspruch, **gekennzeichnet dadurch, dass** der elektrische Aktuator (21) konfiguriert ist, um die Schraubzwinge (16) zwischen einer offenen Konfiguration und einer Zwischenkonfiguration umzuschalten.

7. Klemmvorrichtung (4) nach dem vorhergehenden Anspruch, **gekennzeichnet dadurch, dass** der pneumatische Aktuator (20) konfiguriert ist, um die Schraubzwinge (16) zwischen der Zwischenkonfiguration und einer Klemmkonfiguration umzuschalten.

8. Klemmvorrichtung (4) nach dem vorangehenden Anspruch, **gekennzeichnet dadurch, dass** die Betätigungsmittel (19) an dem zweiten Element (10) des Stützkörpers (4) angebracht sind.

9. Klemmvorrichtung (4) nach einem der vorhergehenden Ansprüche, **gekennzeichnet dadurch, dass** die Antriebsmittel (23) mindestens zwei Gleitblöcke (5) umfassen, die dazu ausgebildet sind, entlang der Arbeitsrichtung (X-X) zu gleiten.

10. Klemmvorrichtung (4) nach einem der vorhergehenden Ansprüche, **dadurch gekennzeichnet, dass** die obere Fläche (11) keine ebene Fläche ist.

11. Arbeitsstation (3), die **dadurch gekennzeichnet ist, dass** sie mehrere Klemmvorrichtungen (4) nach einem der vorangehenden Ansprüche umfasst.

## Revendications

1. Appareil de serrage (4), comprenant :
- un corps de support (8) configuré pour se déplacer dans une direction de travail (X-X),
- un étau (16) comprenant une mâchoire fixe (17) et une mâchoire mobile (18) qui se déplace dans une direction de serrage (Y-Y), perpendiculaire à la direction de travail (X-X), à partir de et vers la mâchoire fixe (17) pour serrer une pièce à usiner,
- des moyens d'actionnement (19) pour déplacer la mâchoire mobile (18) par rapport à la mâchoire fixe (17) dans la direction de serrage (Y-Y),
**caractérisé en ce que** ledit corps de support (8) comprend :
- un premier élément (9) ayant des moyens d'entraînement (23) configurés pour être couplés à des premiers guides de translation (2) pour déplacer le corps de support le long de la direction de travail (X-X), ledit premier élément (9) ayant une surface supérieure (11),
- un second élément (10), qui est associé de manière opérationnelle au premier élément (9) et est configuré pour se déplacer de manière réversible par rapport au premier élément (9) le long d'une direction de mouvement inclinée (U-U), qui forme un angle non nul avec la direction de serrage (Y-Y) et est perpendiculaire à la direction de travail (X-X), ledit étau (16) étant monté sur le second élément (10), la surface supérieure (11) du premier élément (9) s'étendant le long de ladite direction de mouvement (U-U),
- des moyens de translation (14) configurés pour translater de manière réversible le second élément (10) par rapport au premier élément (9) le long de la direction de mouvement (U-U).

2. Appareil de serrage (4) selon la revendication précédente, **caractérisé en ce que** ledit premier élément (9) comprend un second guide de translation (12) sur ladite surface supérieure (11), qui s'étend le long de ladite direction de mouvement (U-U).

3. Appareil de serrage (4) selon la revendication précédente, **caractérisé en ce que** ledit second élément (10) du corps de support (8) a une surface inférieure (13) ; ladite surface inférieure (13) faisant face à ladite surface supérieure (11) du premier élément (9) du corps de support (4) et étant configurée pour coulisser de manière réversible le long dudit second guide de translation (12).

4. Appareil de serrage (4) selon l'une quelconque des revendications précédentes, **caractérisé en ce que** lesdits moyens de translation (14) comprennent un coulisseau (14a), qui est fixé de manière stable au second élément (10) du corps de support (4) ; un moteur (15) étant fixé audit premier élément (10) et étant configuré pour actionner ledit coulisseau (14a) dans la direction de mouvement (U-U).

5. Appareil de serrage (4) selon l'une quelconque des revendications précédentes, **caractérisé en ce que** lesdits moyens d'actionnement (19) comprennent un actionneur électrique (21) et un actionneur pneumatique (20) ; ledit actionneur électrique (21) et ledit actionneur pneumatique (20) étant configurés pour être actionnés séquentiellement.

6. Appareil de serrage (4) selon la revendication précédente, **caractérisé en ce que** ledit actionneur électrique (21) est configuré pour commuter ledit étau (16) entre une configuration ouverte et une configuration intermédiaire.

7. Appareil de serrage (4) selon la revendication précédente, **caractérisé en ce que** ledit actionneur pneumatique (20) est configuré pour commuter ledit étau (16) entre ladite configuration intermédiaire et une configuration de serrage.

8. Appareil de serrage (4) selon la revendication précédente, **caractérisé en ce que** lesdits moyens d'actionnement (19) sont fixés audit second élément (10) du corps de support (4).

9. Appareil de serrage (4) selon l'une quelconque des revendications précédentes, **caractérisé en ce que** lesdits moyens d'entraînement (23) comprennent au moins deux blocs coulissants (5) qui sont configurés pour coulisser le long de la direction de travail (X-X).

10. Appareil de serrage (4) selon l'une quelconque des revendications précédentes, **caractérisé en ce que** ladite surface supérieure (11) n'est pas une surface plate.

11. Poste de travail (3) **caractérisé en ce qu'**il comprend une pluralité d'appareils de serrage (4) selon l'une quelconque des revendications précédentes.
